(19)

**Europäisches Patentamt**

**European Patent Office**

**Office européen des brevets**

(11) **EP 2 603 992 B1**

(12) **EUROPEAN PATENT SPECIFICATION**

(45) Date of publication and mention of the grant of the patent:
**05.12.2018 Bulletin 2018/49**

(51) Int Cl.:
*H04J 11/00* (2006.01)   *H04B 7/26* (2006.01)
*H04W 24/10* (2009.01)   *H04W 52/36* (2009.01)

(21) Application number: **11816596.8**

(86) International application number:
**PCT/KR2011/005835**

(22) Date of filing: **10.08.2011**

(87) International publication number:
**WO 2012/020980 (16.02.2012 Gazette 2012/07)**

(54) **METHOD AND APPARATUS FOR REPORTING POWER HEADROOM INFORMATION IN MOBILE COMMUNICATION SYSTEM SUPPORTING CARRIER AGGREGATION**

VERFAHREN UND VORRICHTUNG ZUR MELDUNG VON LEISTUNGSRESERVENINFORMATIONEN IN EINEM MOBILKOMMUNIKATIONSSYSTEM MIT UNTERSTÜTZUNG VON TRÄGERAGGREGATIONEN

PROCÉDÉ ET APPAREIL DE SIGNALEMENT D'INFORMATIONS DE MARGE DE PUISSANCE DANS UN SYSTÈME DE COMMUNICATION MOBILE ACCEPTANT L'AGRÉGATION DE PORTEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2011 KR 20110074084**
**05.11.2010 US 410493 P**
**12.10.2010 US 392436 P**
**04.10.2010 US 389476 P**
**16.09.2010 US 383437 P**
**16.08.2010 US 374160 P**
**10.08.2010 US 372452 P**

(43) Date of publication of application:
**19.06.2013 Bulletin 2013/25**

(73) Proprietor: **Samsung Electronics Co., Ltd.**
**Gyeonggi-do 443-742 (KR)**

(72) Inventors:
• **JEONG, Kyeong In**
  **Suwon-si**
  **Gyeonggi-do 443-711 (KR)**
• **KIM, Sang Bum**
  **Seoul 140-220 (KR)**
• **KIM, Soeng Hun**
  **Yongin-si**
  **Gyeonggi-do 446-908 (KR)**
• **VAN LIESHOUT, Gert, Jan**
  **NL-7314 CG Apeldoorn (NL)**

(74) Representative: **Grünecker Patent- und Rechtsanwälte**
**PartG mbB**
**Leopoldstraße 4**
**80802 München (DE)**

(56) References cited:
**EP-A1- 2 472 942        KR-A- 20090 101 786**
**US-A1- 2010 158 147**

• ZTE: "Discussion on CC specific PHR reporting", 3GPP DRAFT; R2-103724 DISCUSSION ON CC SPECIFIC PHR REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451199, [retrieved on 2010-06-22]
• ERICSSON ET AL: "Details of PHR Handling for CA", 3GPP DRAFT; R2-103570- DETAILS OF PHR HANDLING FOR CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628 - 20100702, 21 June 2010 (2010-06-21), XP050605205, [retrieved on 2010-06-21]

EP 2 603 992 B1

- **ERICSSON: "Summary of e-mail discussion [70#15] LTE CA: PHR Handling", 3GPP DRAFT; R2-103580 SUMMARY OF RAN2-70 NR 15 - PHR HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628 - 20100702, 22 June 2010 (2010-06-22), XP050605219, [retrieved on 2010-06-22]**
- **3GPP: '3rd Generation Partnership Project; Technical Specification Group Radio Access Network; Evolved Universal Terrestrial Radio Access (E-UTRA); Medium Access Control (MAC) protocol specification (Release 9)' 3GPP TS 36.321 V9.3.0 June 2010, XP055121209 Retrieved from the Internet: <URL:http://www.3gpp.org/ftp/Specs/html-info/36321.htm> [retrieved on 2012-03-23]**
- **MEDIATEK: 'Per UE PHR for carrier aggregation' 3GPP TSG-RAN WG1 MEETING #61BIS, R1-103743 28 June 2010, XP050449422 Retrieved from the Internet: <URL:http://www.3gpp.org/ftp/tsg_ran/wg1-r11/tsgr1-61b/docs> [retrieved on 2012-03-23]**

## Description

### Technical Field

The present invention relates to a mobile communication system supporting carrier aggregation. More specifically, the present invention relates to a method and apparatus for reporting Power Headroom (PH) of a User Equipment (UE) per carrier efficiently in a mobile communication system supporting carrier aggregation.

### Background Art

Mobile communication systems developed to provide subscribers with voice communication services on the move. With the rapid advance of technology, mobile communication systems have evolved to support high speed data communication services as well as standard voice communication services.

Recently, Long Term Evolution (LTE) is under development as the next generation mobile communication system of the 3rd Generation Partnership Project (3GPP). The LTE system is a technology for realizing high-speed packet-based communication at about 100 Mbps. A discussion is being held on several schemes for LTE, including one scheme for reducing the number of nodes located in a communication path by simplifying a configuration of the network, and another scheme for maximally approximating wireless protocols to wireless channels.

Unlike voice services, resources for data services are allocated according to the data amount to be transmitted and channel condition. Accordingly, in a wireless communication system such as a cellular communication system, a scheduler manages resources according to the resource amount, channel condition, and data amount. This is also the case in the LTE system, in which the scheduler located in the base station manages and allocates the radio resource.

Recently, LTE-Advanced (LTE-A) is actively being discussed as an evolution of LTE with new techniques to increase data rates. Carrier aggregation is one of the representative techniques that are newly adopted in LTE-A. Unlike the data communication of the related art in which a User Equipment (UE) uses a single uplink carrier and a single downlink carrier, carrier aggregation enables the UE to use multiple uplink and/or downlink carriers. The patent application US 2010/158147 A1 discloses reporting Power Headroom, PH, by a terminal to a base station in a mobile communication system supporting carrier aggregation, wherein, in absence of data channel transmission in a carrier, a reference format is used for the carrier. The reference format includes a virtual maximum transmission power.

### Disclosure of Invention

### Technical Problem

Since the uplink transmission power determination algorithm is designed for the UE operating with one uplink carrier and one downlink carrier, it is difficult to apply the transmission power determination process for uplink transmission power determination of the UE supporting carrier aggregation. There is a need to define a procedure and method for reporting Power Headroom (PH) of the UE supporting carrier aggregation.

### Solution to Problem

The invention is set out in the appended set of claims.

Other aspects, advantages, and salient features of the invention will become apparent to those skilled in the art from the following detailed description, which, taken in conjunction with the annexed drawings, discloses exemplary embodiments of the invention.

### Advantageous Effects of Invention

According to the present invention, the PH reporting method and apparatus for a mobile communication system supporting carrier aggregation according to exemplary embodiments of the present invention enables efficient reporting or the PH per carrier. If multiple carriers are aggregated, the UE can configure the PHs for the multiple carriers into a PHR. By using the per-carrier PHs transmitted in aggregated manner, it is possible to determine the uplink transmission power more efficiently in the mobile communication system supporting carrier aggregation.

### Brief Description of Drawings

The above and other aspects, features, and advantages of certain exemplary embodiments of the present invention will be more apparent from the following description taken in conjunction with the accompanying drawings, in which:

FIG. 1 is a diagram illustrating an architecture of a mobile communication system according to an exemplary embodiment of the present invention;

FIG. 2 is a diagram illustrating a protocol stack of a mobile communication system according to an exemplary embodiment of the present invention;

FIG. 3 is a diagram illustrating an exemplary situation of carrier aggregation in a mobile communication system according to an exemplary embodiment of the present invention;

FIG. 4 is a conceptual diagram illustrating a principle of carrier aggregation for use in a mobile communication according to an exemplary embodiment of the present invention;

FIG. 5 is a diagram illustrating an exemplary scenario of Power Headroom (PH) reporting according to an exemplary embodiment of the present invention;

FIG. 6 is a flowchart illustrating a PH reporting procedure of a User Equipment (UE) according to an exemplary embodiment of the present invention;

FIG. 7 is a flowchart illustrating a PH reception procedure of an evolved Node B (eNB) according to an exemplary embodiment of the present invention; and

FIG. 8 is a block diagram illustrating a configuration of a PH reporting apparatus of the UE according to an exemplary embodiment of the present invention.

Throughout the drawings, it should be noted that like reference numbers are used to depict the same or similar elements, features, and structures.

**Mode for the Invention**

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

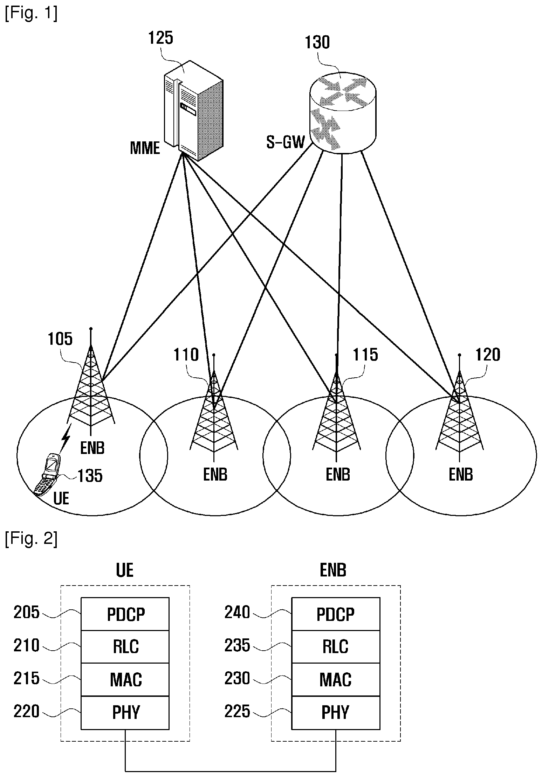

Exemplary embodiments of the present invention relate to a method and apparatus for a User Equipment (UE) to report Power Headroom (PH) information efficiently in the mobile communication system supporting carrier aggregation. An exemplary mobile communication system to which an exemplary embodiment of the present invention is applied is described below with reference to FIGs. 1 to 3. The description is directed to a Long Term Evolution (LTE) system, but other wireless communication technologies may also be employed.

FIG. 1 is a diagram illustrating an architecture of a mobile communication system according to an exemplary embodiment of the present invention.

Referring to FIG. 1, the radio access network of the mobile communication system includes evolved Node Bs (eNBs) 105, 110, 115, and 120, a Mobility Management Entity (MME) 125, and a Serving-Gateway (S-GW) 130. The UE 135 connects to an external network via eNBs 105, 110, 115, and 120 and the S-GW 130.

The eNBs 105, 110, 115, and 120 correspond to legacy node Bs of Universal Mobile Communications System (UMTS). The eNBs 105, 110, 115, and 120 allow the UE establish a radio link and are responsible for complicated functions as compared to the legacy node B. In the LTE system, all user traffic, including real time services such as Voice over Internet Protocol (VoIP), is provided through a shared channel and thus there is a need of a device which is located in the eNB to schedule data based on the state information of the UEs. In order to implement a data rate of up to 100Mbps, the LTE system adopts Orthogonal Frequency Division Multiplexing (OFDM) as a radio access technology. The LTE system adopts Adaptive Modulation and Coding (AMC) to determine the modulation scheme and channel coding rate according to the channel condition of the UE.

S-GW 130 is an entity to provide data bearers so as to establish and release data bearers under the control of the MME 125. MME 125 is responsible for various control functions and is connected to the eNBs 105, 110, 115, and 120.

FIG. 2 is a diagram illustrating a protocol stack of the mobile communication system according to an exemplary embodiment of the present invention.

Referring to FIG. 2, the protocol stack of the LTE system includes Packet Data Convergence Protocol (PDCP) layer 205 and 240, Radio Link Control (RLC) layer 210 and 235, Medium Access Control (MAC) layer 215 and 230, and Physical (PHY) layer 220 and 225. The PDCP layer 205 and 240 is responsible for Internet Protocol (IP) header compression/decompression. The RLC layer 210 and 235 is responsible for segmenting the PDCP Protocol Data Unit (PDU) into segments in a size appropriate for Automatic Repeat Request (ARQ) operation. The MAC layer 215 and 230 is responsible for establishing connections to a plurality of RLC entities so as to multiplex the RLC PDUs into MAC PDUs and demultiplex the MAC PDUs into RLC PDUs. The PHY layer 220 and 225 performs channel coding on the MAC PDU and modulates the MAC PDU into OFDM symbols to transmit over a radio channel, or performs demodulating and channel-decoding on the received OFDM symbols and delivers the decoded data to a higher layer. The data input to a protocol entity is referred to as Service Data Unit (SDU), and the data output by the protocol entity is referred to as a PDU.

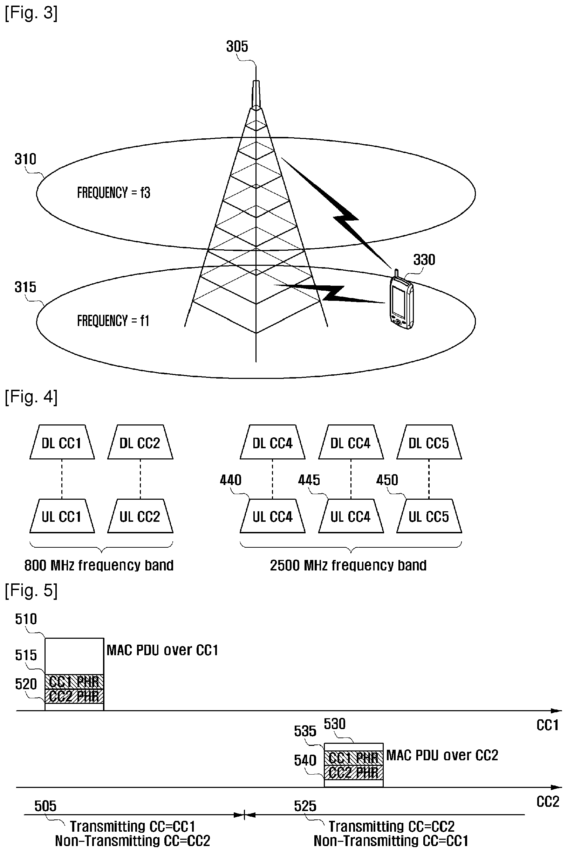

FIG. 3 is a diagram illustrating an exemplary situation of carrier aggregation in the mobile communication system according to an exemplary embodiment of the present invention.

Referring to FIG. 3, an eNB typically uses multiple carriers transmitted and received in different frequency bands. For example, the eNB 305 may be configured to use the carrier 315 with center frequency f1 and the carrier 310 with center frequency f3. If carrier aggregation is not supported, the UE 330 transmits/receives data using just one of the carriers 310 and 315. However, the UE 330 having the carrier aggregation capability may transmit/receive data using both the carriers 310 and 315.

The eNB may increase the amount of resources to be allocated to the UE having the carrier aggregation capability according to the channel condition of the UE so as to improve the data rate of the UE. If a cell is configured with one downlink carrier and one uplink carrier, the carrier aggregation can be understood as if the UE communicates data via multiple cells. With the use of carrier aggregation, the maximum data rate increases in proportion to the number of aggregated carriers. The aggregated carriers are configured via Radio Resource Control (RRC) signaling. In LTE, it is possible to add or remove a carrier to or from the carrier aggregation using an RRC-ConnectionReconfiguration message. Although a specific carrier is configured, data transmission is not performed yet. In order to use the corresponding carrier, the carrier is activated by MAC signaling. In LTE, the configured carrier is activated by a MAC Control Element (CE) in the MAC PDU. Since the service is provided through the multiple activated carriers, multiple serving cells may exist.

In order to mitigate interference, the uplink transmission power may be maintained below an appropriate level. For this purpose, the UE calculates the uplink transmission power using a predetermined function and performs uplink transmission at the calculated uplink transmission power. For example, the UE calculates the required uplink transmission power value by inputting the input values such as the scheduling information including resource amount and Modulation and Coding Scheme (MCS) allocated to the UE and information necessary for estimating the channel condition such as path loss, and performs uplink transmission by applying the calculated uplink transmission power value. The available uplink transmission power value of the UE is limited to the maximum transmission power value of the UE such that when the calculated transmission power value exceeds the maximum transmission power value, the UE performs the uplink transmission at the maximum transmission power. In this case, the uplink transmission power is not enough, resulting in uplink transmission quality degradation. Accordingly, the eNB may perform scheduling such that the required transmission power does not exceed the maximum transmission power. However, since a few parameters such as path loss cannot be determined by the eNB, the UE reports its PH value to the eNB by means of a PHR.

Several factors influence PH, including 1) allocated transmission resource amount, 2) MCS to be applied to uplink transmission, 3) Path Loss (PL) of the related downlink carrier, and 4) accumulated value of transmission power control command. The Path Loss and accumulated transmission power control command value are variable according to the uplink carrier such that, when multiple uplink carriers are aggregated, the transmission of the PHR may be configured per carrier. In order to transmit the PHR efficiently, it can be advantageous to report the PHs of all the uplink carriers on one uplink carrier. Depending on the management policy, it may be necessary to transmit the PH of the carrier on which no Physical Uplink Shared Channel (PUSCH) transmission actually takes place. In this case, it may be more efficient to report the PHs of the multiple uplink carriers on a single uplink carrier. For this purpose, it is necessary to extend the PHR. The multiple PHs to be contained in a PHR can be arranged in a predetermined order.

FIG. 4 is a conceptual diagram illustrating a principle of carrier aggregation for use in the mobile communication according to an exemplary embodiment of the present invention.

Referring to FIG. 4, 5 uplink carriers can be aggregated for the UE, and one of the aggregated carriers can be selected to transmit the PHs for the 5 uplink carriers. For example, when three uplink carriers 440, 445, and 450 are aggregated for the UE, a PHR can be configured to carry the PHs for the three uplink carriers.

A PHR is triggered when the path loss of the connected downlink carrier is equal to or greater than a predetermined threshold value, a prohibit PHR time expires, or a predetermined time period elapses after the last PHR generation. Once PHR has triggered, the UE waits until the time available for the uplink transmission arrives, e.g., the time for which the uplink transmission resource is allocated, rather than transmit the PHR immediately. This is because PHR is not time-sensitive information. The UE transmits PHR at the first uplink transmission. PHR is the MAC layer control information and has the length of 8 bits. The first two bits of PHR are reserved for future use, and the remaining 6 bits are used to indicate the value in the range between -23dB and 40dB as the power headroom of the UE. The UE calculates the PH using the following Math Figure 1:
MathFigure 1

[Math.1]

$$PH(i) = P_{\text{CMAX,c}}(i) - \left\{ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \right\}$$

The PH(i) of the ith subframe in the serving cell c is calculated with the maximum uplink transmission power $P_{\text{CMAX,c}}(i)$, number of resource blocks $M_{\text{PUSCH,c}}(i)$, power offset derived from MCS $\Delta_{\text{TF,c}}$, Path Loss $PL_c$, and accumulated Transmission Power Control (TPC) commands $f_c(i)$. In Math Figure 1, $PL_c$ denotes the pass loss of a cell which provides the information on the path loss in the service cell c. The path loss used to determine uplink transmission power of a certain serving cell is the path loss of the downlink channel of the corresponding cell or the path loss of a downlink channel of another cell. The cell of which path loss is to be used is selected by the eNB and notified to the UE in the call setup process.

In Math Figure 1, $f_c(i)$ is the accumulated value of the accumulated TPC commands of the serving cell c. $P_{\text{O\_PUSCH,C}}$ denotes a higher layer parameter corresponding to the sum of cell-specific and UE-specific values. Typically, $P_{\text{O\_PUSCH,C}}$ is set to a value determined according to the transmission type of PUSCH, such as the semi-persistent scheduling, dynamic scheduling, and random access response. $\alpha_c$ denotes a 3-bit cell specific value provided from a higher layer as the weight applied to the path loss when calculating uplink transmission power (i.e., the higher this value, the more the path loss influences the uplink transmission power), and its value is limited according to the transmission type of the PUSCH. j denotes the transmission type of the PUSCH. The parameter j is set to 0 for semi-persistent scheduling, 1 for dynamic scheduling, and 2 for random access response. If there is no PUSCH transmission, $M_{\text{PUSCH}}$ and $\Delta_{\text{TF}}$ are not applied to the Math Figure 1.

In a mobile communication system supporting carrier aggregation, there can be a serving cell in which no PUSCH transmission takes place and a serving cell in which PUSCH transmission takes place. The PH for a serving cell may be reported in another serving cell. In the mobile communication system supporting carrier aggregation, when it is necessary to report the PHs of multiple serving cells, the UE may transmit the PHs in a single PHR. This method is advantageous to reduce the signaling overhead as compared to the method transmitting the PHs individually, and the eNB can acquire the PH for the carrier on which no PUSCH is transmitted.

FIG. 5 is a diagram illustrating an exemplary scenario of PH reporting according to an exemplary embodiment of the present invention.

Referring to FIG. 5, a scenario is shown in which each of two serving cells CC1 and CC2 transmits the PHs of both the serving cells. In the time duration 505 for which PUSCH transmission takes place in CC1 but not in CC2, the UE can transmit MAC PDU 510 containing the CC1 PH 515 and CC2 PH 520. In the time duration 525 for which PUSCH transmission takes place in CC2 but not in CC1, the UE can transmit MAC PDU 530 containing the CC1 H 535 and CC2 PH 640.

Although no PUSCH is transmitted, the eNB may trigger PHR to acquire the path loss information on a specific uplink carrier. Accordingly, exemplary embodiments of the present invention include a method for calculating PH for the carrier carrying no PUSCH and a PHR format which allows the eNB to identify the PH.

When PHR is triggered for a specific serving cell, the UE determines the method for calculating the PH value according to whether the PUSCH is transmitted on the corresponding carrier. If PUSCH transmission takes place in the corresponding serving cell, the PH is calculated using Math Figure 1 as specified for a normal process. If no PUSCH transmission takes place in the corresponding serving cell, this means no resource is allocated for transmission such that the values of $M_{\text{PUSCH}}$ and $\Delta_{\text{TF}}$ are apparent. Accordingly, there is a need of a device which allows the eNB and UE to calculate and interpret the PH using the same $M_{\text{PUSCH}}$ and $\Delta_{\text{TF}}$. This goal can be addressed by defining a transmission format (transmission resource amount and MCS level) to be used for PH calculation on the carrier carrying no PUSCH. Assuming one Resource Block (RB) and lowest MCS level as the reference transmission format, M PUSCH and $\Delta_{\text{TF}}$ become 0 so as to be able to be omitted in Math Figure 1. Since no data transmission takes place in the corresponding serving cell, $P_{\text{CMAX,c}}(i)$ does not exist. Accordingly, the value of $P_{\text{CMAX,c}}(i)$ should be determined. According to an exemplary embodiment of the present invention, a virtual $P_{\text{CMAX,c}}(i)$ is defined and applied for such virtual transmission. $P_{\text{CMAX,c}}(i)$ may be determined using the maximum allowed transmission power $P_{\text{EMAX}}$ and the immanent maximum transmission power of the UE $P_{\text{PowerClass}}$. For example, $P_{\text{CMAX,c}}(i)$ can be determined according to Math Figure 2.
MathFigure 2

[Math.2]

$$P_{CMAX,c} = \min \{P_{EMAX}, P_{PowerClass}\}$$

This has the same meaning that MPR, A-MPR, P-MPR, and $T_C$ are all set to 0. $P_{CMAX}$ is determined in the relationship of $P_{CMAX\_L} \leq P_{CMAX} \leq P_{CMAX\_H}$. If all of MPR, A-MPR, P-MPR, and $T_C$ are set to 0, $P_{CMAX\_L}$ becomes equal to $P_{CMAX\_H}$, resulting in $P_{CMAX} = P_{CMAX\_H}$. $P_{CMAX\_H}$ is the one having the least value among $P_{PowerClass}$ and $P_{EMAX}$. $P_{EMAX}$ is the cell-specific maximum allowed transmission power and $P_{PowerClass}$ is the UE-specific Maximum allowed transmission power. Accordingly, when no PUSCH transmission takes place in the serving cell, PH is defined by Math Figure 3:
MathFigure 3

[Math.3]

$$PH(i) = \min\{P_{EMAX}, P_{PowerClass}\} - \{P_{O\_PUSCH,c}(j) + \alpha_c(j) \cdot PL_c + f_c(i)\}$$

In Math Figure 3, the values of the corresponding serving cells for which PHs are calculated but not transmitted are determined with the $P_{O\_PUSCH,C}$, $\alpha_c$, $f_c(i)$, $PL_c$. The PH calculated by Math Figure 3 is reported to the eNB along with other PHs transmitted in another serving cell. In view of eNB, it is possible to check the PHs for multiple serving cells with one PHR. One problem is that the eNB does not know whether each of the per-cell PHs contained in the PHR is calculated according to PUSCH transmission and by using the PUSCH reference format according to an exemplary embodiment of the present invention. Without such information, the eNB may not be able to interpret the reported PHs correctly, resulting in failure of efficient scheduling. In order to address this issue, an indicator for indicating the PUSCH transmission and use of the proposed PUSCH reference format is included in the PHR. The indicator is added for PH per activated serving cell. This indicator may be implemented with 1 bit. When calculating PH of a certain cell, if the PH is calculated under the assumption of PUSCH transmission, i.e., using the actual transmission format, the UE sets the corresponding bit to a predetermined value (e.g., 0). If PH is calculated using the reference format (i.e., number of RBs = 0 and $\Delta_{TF} = 0$), the UE sets the corresponding bit to a predetermined value (e.g., 1).

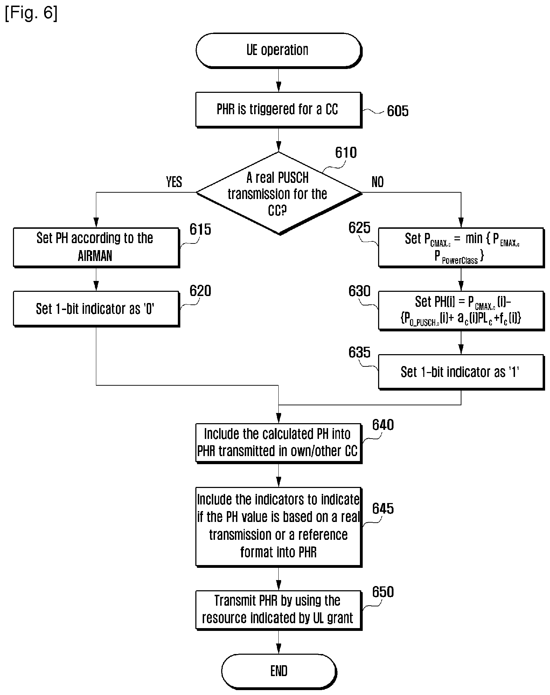

FIG. 6 is a flowchart illustrating a PH reporting procedure of a UE according to an exemplary embodiment of the present invention.

Referring to FIG. 6, the UE detects a PHR trigger for a specific serving cell in step 605. PHR can be triggered when the path loss of the linked downlink carrier becomes equal to or greater than a predetermined value or periodically at a predetermined PHR period. Once the PHR trigger is detected, the UE determines whether the real PUSCH transmission takes place in the corresponding serving cell in step 610.

If the real PUSCH transmission takes place in the corresponding serving cell, the UE calculates PH according to a typical method in step 615. The UE calculates PH for the corresponding cell using Math Figure 1. The UE sets the PH type indicator so as to indicate that PH is calculated according to the typical method in step 620. According to an exemplary embodiment of the present invention, the PH type indicator is 1 bit and set to 0 for indicating the use of the normal PH method. Since PUSCH transmission takes place in the corresponding serving cell, the UE places the calculated PH in the PHR to be transmitted in the corresponding serving cell in step 640, and places the transmission format indicator indicating the use of real $P_{CMAX}$ for the corresponding PH in the PHR in step 645. Finally, the UE transmits the PHR in the corresponding cell in step 650. If necessary, the PH can be transmitted in another serving cell.

Otherwise, if no PUSCH transmission takes place in the corresponding serving cell, the UE calculates PH using the PH calculation equation according to an exemplary embodiment of the present invention in steps 625 and 630. In step 625, $P_{CMAX}$ is calculated with only the $P_{EMAX}$ and $P_{PowerClass}$ omitting the parameters related to real PUSCH transmission. In step 630, PH is calculated with $P_{CMAX}$ derived at step 625 and reference transmission format excluding the parameters related to the real PUSCH transmission. After calculating PH, the UE sets the PH type indicator to 1 for the corresponding cell so as to indicate that the PH of the corresponding cell is derived based on the reference transmission format in step 635. If no PUSCH transmission takes place in the corresponding serving cell, this means that the PHR cannot be transmitted in the corresponding cell. Accordingly, the PH is carried in the PHR transmitted in other cell of the eNB. Accordingly, the UE places the calculated PH in the PHR to be transmitted in the other serving cell at step 640. The UE places the transmission format indicator indicating the use of virtual $P_{CMAX}$ for the corresponding PH in the PHR in step 645. Finally, the UE transmits the PHR in the other serving cell.

According to an exemplary embodiment of the present invention, the UE reports the PHs for multiple carriers using an extended PHR in the mobile communication system supporting carrier aggregation. The UE calculates the PH for each of the activated carriers according to whether the real PUSCH transmission takes place thereon. If the real PUSCH transmission takes place, the UE calculates the PH using Math Figure 1. If no PUSCH transmission takes place, the UE calculates the PH using Math Figure 3, i.e. using a predetermined reference format. The UE calculates the PH under the assumption that the number of resource blocks allocated in PUSCH MPUSCH and the power offset $\Delta_{TF}$ are 0. The UE sets the transmission format indicators for indicating whether the real PUSCH transmissions take place in the corresponding cells. If the PUSCH transmission takes place, the UE sets the transmission format indicator to 0. If no PUSCH transmission takes place, the UE sets the transmission format indicator to 1. The UE generates the extended PHR containing the PHs and indicators and transmits the extended PHR on one of the carriers.

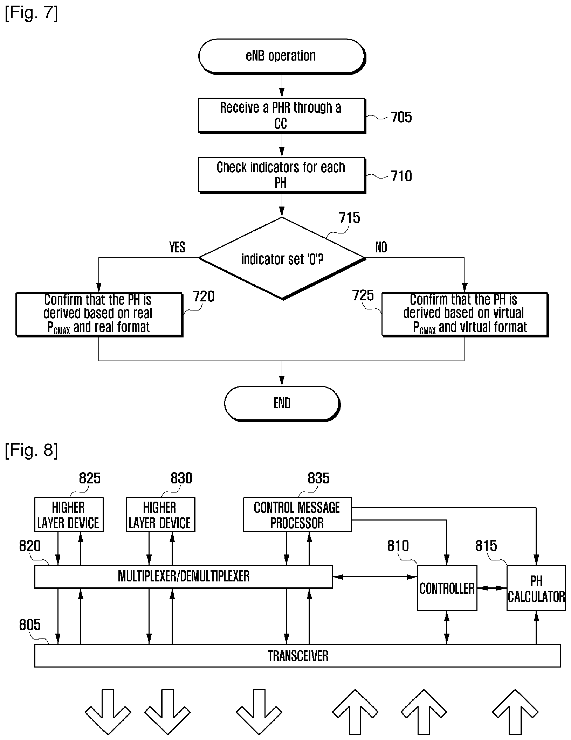

FIG. 7 is a flowchart illustrating a PH reception procedure of an eNB according to an exemplary embodiment of the present invention.

Referring to FIG. 7, the eNB receives a PHR from a UE in one of a plurality of serving cells in step 705. The PHR may include the PHs for the current and other serving cells. The PH for the serving cell in which no PUSCH transmission takes place may be included in the PHR. In order to differentiate between the PHs for the serving cell in which PUSCH transmission takes place and the serving cell in which no PUSCH transmission takes place, the eNB checks the transmission format indicators for individual PHs in step 710. If the transmission format indicator is set to 0, the PH is calculated using the real $P_{CMAX}$ for the serving cell in which the real PUSCH transmission takes place. If the transmission format indicator is set to 1, the PH is calculated using the virtual $P_{CMAX}$ for the serving cell in which on PUSCH transmission takes place. After checking the transmission format indicator, the eNB determines whether the transmission format indicator is set to 0 in step 715. If the transmission format indicator is set to 0, the eNB determines that the PH is calculated with the real $P_{CMAX}$ in step 720. This PH is used for scheduling the UE and channel estimation. If the transmission format indicator is set to 1, the eNB determines that the PH is calculated with the virtual $P_{CMAX}$ in step 725. This PH is used to predict the PL and estimate channel.

According to an exemplary embodiment of the present invention, if an extended PHR is received from a UE, the eNB uses the extended PHR to determine uplink transmission power. The eNB includes a transceiver and a controller. The transceiver receives the extended PHR composed of the PHs for a plurality of carriers and indicators corresponding to the PHs, the extended PHR being transmitted on one of the plural activated carriers. The controller determines whether the PUSCH transmission takes place on each of the carriers. If the transmission format indicator is set to 0, the controller determines that the PH is of the carrier on which PUSCH transmission takes place. If the PUSCH transmission takes place on the carrier the PH is calculated using Math Figure 1. If the transmission format indicator is set to 1, the controller determines that the PH is of the carrier on which no PUSCH transmission takes place. If no PUSCH transmission takes place on the carrier, this means that the PH is calculated using Math Figure 3, i.e., calculated according to a predetermined reference format. In this manner, the controller determines the uplink transmission powers for the respective carriers based on the PHs according to whether PUSCH transmission takes place on the respective carriers.

FIG. 8 is a block diagram illustrating a configuration of a PH reporting apparatus of the UE according to an exemplary embodiment of the present invention.

Referring to FIG. 8, the UE includes a transceiver 805, a PH calculator 815, a controller 810, a multiplexer/demultiplexer 820, a control message processor 835, and various higher layer devices 825 and 830. The UE may include additional units (such as a display unit, input unit, and the like) not shown here for purposes of clarity. Similarly, the functionality of two or more of the above units may be integrated into a single component.

One or more of the units of the UE may be implemented as a software component. Similarly, a unit may be implemented entirely as a hardware (such as one or more processors) or as a combination of hardware and software components. However, it would be understood that at least some of the units would need to be implemented at least partially as a hardware components in order to carry out their function.

The transceiver 805 receives data and control signals on the downlink carriers and transmits data and control signals on the uplink carriers. When a plurality of carriers is aggregated, the transceiver 805 may transmit/receive the data and control signals over a plurality of carriers.

The PH calculator 815 calculates PH according to the control signal from the controller 810 and sends the PH to the controller 810. When a plurality of carriers is aggregated, the PH calculator 815 can calculate PHs for the respective carriers. The PH calculator 815 calculates the PHs for the carriers according to whether PUSCH transmission takes place on each carrier. If the PUSCH transmission takes place, the PH calculator 815 calculates the PH according to a normal method. If no PUSCH transmission takes place, the PH calculator 815 calculates the PH with a predetermined reference format. The PH calculator 815 derives the PH using a virtual $P_{CMAX}$ for the carrier on which no PUSCH transmission takes place according to an exemplary embodiment of the present invention.

The controller 810 controls the multiplexer/demultiplexer 820 to generate MAC PDUs according to the control signal received by means of the transceiver 805, e.g. the scheduling information in the uplink grant. The controller detects the PHR trigger. If a PHR trigger is detected, the controller 810 controls the PH calculator 815 to calculate the PH. Whether PHR is triggered can be determined according to the PHR parameter provided by the control message processor 835. If the PHs of multiple uplink carriers are configured into a PHR, the controller 810 controls the multiplexer/demultiplexer 820 to place in the MAC PDU an indicator indicating whether the PH for each carrier is derived from real $P_{CMAX}$ or virtual $P_{CMAX}$. The controller 810 generates the PHR with the PHs provided by the PH calculator 815 and sends the PHR to the multiplexer/demultiplexer 820. If multiple carriers are aggregated, the controller 810 may report the PHs using an extended PHR configured according to an exemplary embodiment of the present invention. The controller 810 may configure the PHs of the multiple carriers into the extended PHR along with the transmission format indicators corresponding to the PHs. The controller 810 may transmit the extended PHR on one of the multiple carriers.

The multiplexer/demultiplexer 820 multiplexes the data from the higher layer devices 825 and 830 and/or control message processor 835 and demultiplexes the data received by the transceiver 805 to the higher layer devices 825 and 830 and/or the control message processor 835.

The control message processor 835 processes the control message transmitted by the network and takes a necessary action. The control message processor 835 forwards the PHR parameter carried in the control message to the controller 810 or the information on the newly activated carriers to the transceiver 805 to set the carriers. The higher layer devices 825 and 830 may be implemented for the respective services so as to deliver the data generated by the user service such as File Transfer Protocol (FTP) and VoIP to the multiplexer/demultiplexer 820 or process and deliver the data form the multiplexer/demultiplexer 820 to the service applications of the higher layer.

As described above, the PH reporting method and apparatus for a mobile communication system supporting carrier aggregation according to exemplary embodiments of the present invention enables efficient reporting or the PH per carrier. If multiple carriers are aggregated, the UE can configure the PHs for the multiple carriers into a PHR. By using the per-carrier PHs transmitted in aggregated manner, it is possible to determine the uplink transmission power more efficiently in the mobile communication system supporting carrier aggregation.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A method for reporting Power Headroom, PH, of a terminal in a mobile communication system supporting carrier aggregation, the method comprising:

    determining PHs for multiple activated carriers based on data channel transmission or, in absence of data channel transmission, a reference format on each carrier;
    configuring indicators for the PHs, each indicator indicating whether a PH corresponding to an indicator is determined based on the data channel transmission taking place on the corresponding carrier or on the reference format; and
    transmitting the PHs and the indicators in an extended PH Report, PHR, on one of the multiple activated carriers, and
    wherein the indicator is 1 bit; wherein a virtual maximum transmission power is used to identify the reference format, and
    wherein the virtual maximum transmission power is determined as a lowest value between a cell-specific maximum allowed transmission power and a terminal-specific maximum allowed transmission power.

2. The method of claim 1, wherein the reference format is determined under an assumption that a parameter associated with a number of resource blocks and a power offset are "0".

3. The method of claim 1, wherein the configuring of the indicators comprises:

    setting an indicator to "0" for a PH on a corresponding carrier where the data channel transmission takes place; and
    setting an indicator to "1" for a PH on a corresponding carrier where no data channel transmission takes place.

4. An apparatus for reporting Power Headroom, PH, of a terminal in a mobile communication system supporting carrier aggregation, the apparatus comprising:

    a transceiver (805) configured to transmit and receive a signal; and
    a controller (810) configured to control to determine PHs for multiple activated carriers based on data channel transmission or, in absence of data channel transmission, a reference format on each carrier, to configure indicators for the PHs, each indicator indicating whether a PH corresponding to an indicator is determined based on the data channel transmission taking place on the corresponding carrier or on the reference format, to transmit the PHs and the indicators in an extended PH report, PHR, on one of the multiple activated carriers, and wherein the indicator is 1 bit; wherein a virtual maximum transmission power is used to identify the reference format, and

wherein the virtual maximum transmission power is determined as a lowest value between a cell-specific maximum allowed transmission power and a terminal-specific maximum allowed transmission power.

5. The apparatus of claim 4, wherein the reference format is determined under an assumption that a parameter associated with a number of resource blocks and a power offset are "0".

6. The apparatus of claim 4, wherein the controller (810) is configured to set an indicator to "0" for a PH on a corresponding carrier where the data channel transmission takes place and to set an indicator to "1" for a PH on a corresponding carrier where no data channel transmission takes place.

7. A method for a base station to receive Power Headroom, PH, in a mobile communication system supporting carrier aggregation, the method comprising:

receiving an extended PH Report, PHR, including multiple PHs for multiple activated carriers and indicators corresponding to the PHs through one of the multiple activated carriers; and

identifying the indicators corresponding to the PHs to determine whether data channel transmission takes place on a carrier corresponding to a PH, each indicator indicating whether a PH corresponding to an indicator is determined based on the data channel transmission taking place on the corresponding carrier or on a reference format, and

wherein the indicator is 1 bit; wherein a virtual maximum transmission power is used to identify the reference format, and

wherein the virtual maximum transmission power is determined as a lowest value between a cell-specific maximum allowed transmission power and a terminal-specific maximum allowed transmission power.

8. The method of claim 7, wherein the reference format is determined under an assumption that a parameter associated with a number of resource blocks and a power offset are "0".

9. The method of claim 7, wherein an indicator is set to "0" for a PH on a corresponding carrier where the data channel transmission takes place, and wherein an indicator is set to "1" for a PH on a corresponding carrier where no data channel transmission takes place.

10. An apparatus for a base station to receive Power Headroom, PH, in a mobile communication system, the apparatus comprising:

a transceiver (805) configured to transmit and receive a signal; and

a controller (810) configured to control to receive an extended PH Report, PHR, including multiple PHs for multiple activated carriers and indicators corresponding to the PHs through one of the multiple activated carriers, and to identify the indicators corresponding to the PHs to determine whether data channel transmission takes place on a carrier corresponding to a PH, each indicator indicating whether a PH corresponding to an indicator is determined based on the data channel transmission taking place on the corresponding carrier or on a reference format, and

wherein the indicator is 1 bit; wherein a virtual maximum transmission power is used to identify the reference format, and

wherein the virtual maximum transmission power is determined as a lowest value between a cell-specific maximum allowed transmission power and a terminal-specific maximum allowed transmission power.

11. The apparatus of claim 10, wherein an indicator is set to "0" for a PH on a corresponding carrier where the data channel transmission takes place, and wherein an indicator is set to "1" for the PH on a corresponding carrier where no data channel transmission takes place.

12. The apparatus of claim 10, wherein the reference format is determined under an assumption that a parameter associated with a number of resource blocks and a power offset are "0".

**Patentansprüche**

1. Ein Verfahren zur Meldung von Leistungsreserveninformationen, Power Headroom PH, in einem Endgerät in einem Mobilkommunikationssystem mit Unterstützung von Trägeraggregationen, das Verfahren umfassend:

   Bestimmen der PHs für mehrfach aktivierte Träger basierend auf Datenkanalübertragung oder, in Abwesenheit von Datenkanalübertragung, ein Referenzformat auf jedem Träger;
   Einrichten von Indikatoren für die PHs, jeder Indikator anzeigend, ob eine PH gemäß eines Indikators bestimmt werden kann, basierend auf der Datenkanalübertragung, die auf dem zugehörigen Träger oder auf dem Referenzformat stattfindet; und
   Übertragen der PHs und der Indikatoren in einem erweiterten PH Bericht, PHR, auf einem der mehrfach aktivierten Träger, und
   wobei der Indikator 1 Bit ist,
   wobei eine virtuelle Übertragungsleistung genutzt wird, ein Referenzformat zu ermitteln, und
   wobei die virtuelle Übertragungsleistung als ein niedrigster Wert zwischen einer zellspezifischen maximal erlaubten Übertragungsleistung und einer endgerätspezifischen maximal erlaubten Übertragungsleistung bestimmt wird.

2. Das Verfahren nach Anspruch 1, wobei das Referenzformat unter der Annahme bestimmt wird, dass eine Kenngröße verbunden mit einer Anzahl an Resource Blocks und eines Leistung-Offsets "0" ist.

3. Das Verfahren nach Anspruch 1, wobei das Einrichten der Indikatoren umfasst:

   Setzen eines Indikators zu "0" für eine PH auf einem zugehörigen Träger, wo Datenkanalübertragung stattfindet; und
   Setzen eines Indikators zu "1" für eine PH auf einem zugehörigen Träger, wo keine Datenkanalübertragung stattfindet.

4. Eine Vorrichtung zur Meldung von Leistungsreserveninformationen, Power Headroom PH, in einem Endgerät in einem Mobilkommunikationssystem mit Unterstützung von Trägeraggregationen, die Vorrichtung umfassend:

   einen Sender-Empfänger (805) derart gestaltet, um ein Signal zu senden und zu empfangen; und
   ein Steuergerät (810) derart gestaltet, um zu überwachen, PHs für mehrfach aktivierte Träger basierend auf Datenkanalübertragung oder, in Abwesenheit von Datenkanalübertragung, eines Referenzformats auf jeden Träger zu bestimmen, Indikatoren für die PHs einzurichten, wobei jeder Indikator anzeigt, ob eine einem Indikator zugehörige PH basierend auf stattfindender Datenkanalübertragung auf dem entsprechenden Träger oder dem Referenzformat bestimmt wurde, die PHs und die Indikatoren in einem erweiterten PH Bericht, PHR, auf einem der mehrfach aktivierten Träger zu übertragen, und
   wobei der Indikator 1 Bit ist,
   wobei eine virtuelle Übertragungsleistung genutzt wird, ein Referenzformat zu ermitteln, und
   wobei die virtuelle Übertragungsleistung als ein niedrigster Wert zwischen einer zellspezifischen maximal erlaubten Übertragungsleistung und einer endgerätspezifischen maximal erlaubten Übertragungsleistung bestimmt wird.

5. Die Vorrichtung nach Anspruch 4, wobei das Referenzformat unter der Annahme bestimmt wird, dass eine Kenngröße verbunden mit einer Anzahl an Resource Blocks und eines Leistung-Offsets "0" ist.

6. Die Vorrichtung nach Anspruch 4, wobei das Steuergerät (810) derart gestaltet ist, einen Indikator zu "0" zu setzen, für eine PH auf einem zugehörigen Träger, wo Datenkanalübertragung stattfindet und einen Indikator zu "1" zu setzen, für eine PH auf einem zugehörigen Träger, wo keine Datenkanalübertragung stattfindet.

7. Ein Verfahren für eine Basisstation Leistungsreserveninformationen, Power Headroom PH, in einem Mobilkommunikationssystem mit Unterstützung von Trägeraggregationen, zu empfangen, das Verfahren umfassend:

   Empfangen eines erweiterten PH Berichtes, PHR, einschließlich mehrerer PHs für mehrfach aktivierte Träger und Indikatoren den PHs durch einen der mehrfach aktivierten Träger zugehörend; und
   Ermitteln der Indikatoren entsprechend zu den PHs, um zu bestimmen, ob Datenkanalübertragung auf einem Träger gemäß der PH stattfindet, jeder Indikator anzeigend, ob eine PH entsprechend eines Indikators bestimmt wurde, basierend auf der auf dem entsprechenden Träger oder dem Referenzformat stattfindenden Datenkanalübertragung, und

wobei der Indikator 1 Bit ist,

wobei eine virtuelle Übertragungsleistung genutzt wird, ein Referenzformat zu ermitteln, und

wobei die virtuelle Übertragungsleistung als ein niedrigster Wert zwischen einer zellspezifischen maximal erlaubten Übertragungsleistung und einer endgerätspezifischen maximal erlaubten Übertragungsleistung bestimmt wird.

8. Das Verfahren nach Anspruch 7, wobei das Referenzformat unter der Annahme bestimmt wird, dass eine Kenngröße verbunden mit einer Anzahl an Resource Blocks und eines Leistung-Offsets "0" ist.

9. Das Verfahren nach Anspruch 7, wobei ein Indikator zu "0" gesetzt wird, für eine PH auf einem zugehörigen Träger, wo Datenkanalübertragung stattfindet und ein Indikator zu "1" gesetzt wird, für eine PH auf einem zugehörigen Träger, wo keine Datenkanalübertragung stattfindet.

10. Eine Vorrichtung für eine Basisstation Leistungsreserveninformationen, Power Headroom PH, in einem Mobilkommunikationssystem mit Unterstützung von Trägeraggregationen, zu empfangen, die Vorrichtung umfassend:

einen Sender-Empfänger (805) derart gestaltet, um ein Signal zu senden und zu empfangen; und

ein Steuergerät (810) derart gestaltet, um zu überwachen, eine erweiterten PH Bericht, PHR, einschließlich mehrerer PHs für mehrfach aktivierte Träger und Indikatoren den PHs durch einen der mehrfach aktivierten Träger zugehörend, zu empfangen, und Indikatoren entsprechend zu den PHs zu ermitteln, um zu bestimmen, ob Datenkanalübertragung auf einem Träger gemäß der PH stattfindet, jeder Indikator anzeigend, ob eine PH entsprechend eines Indikators bestimmt wurde, basierend auf der auf dem entsprechenden Träger oder dem Referenzformat stattfindenden Datenkanalübertragung, und

wobei der Indikator 1 Bit ist,

wobei eine virtuelle Übertragungsleistung genutzt wird, ein Referenzformat zu ermitteln, und

wobei die virtuelle Übertragungsleistung als ein niedrigster Wert zwischen einer zellspezifischen maximal erlaubten Übertragungsleistung und einer endgerätspezifischen maximal erlaubten Übertragungsleistung bestimmt wird.

11. Die Vorrichtung nach Anspruch 10, wobei ein Indikator zu "0" gesetzt wird, für eine PH auf einem zugehörigen Träger, wo Datenkanalübertragung stattfindet und ein Indikator zu "1" gesetzt wird, für eine PH auf einem zugehörigen Träger, wo keine Datenkanalübertragung stattfindet.

12. Die Vorrichtung nach Anspruch 10, wobei das Referenzformat unter der Annahme bestimmt wird, dass eine Kenngröße verbunden mit einer Anzahl an Resource Blocks und eines Leistung-Offsets "0" ist.

**Revendications**

1. Procédé de signalement de marge de puissance, PH (Power Headroom), d'un terminal dans un système de communication mobile acceptant l'agrégation de porteuses, le procédé comprenant:

déterminer des marges de puissance pour plusieurs porteuses activées sur la base d'une transmission par canal de données ou, en l'absence d'une transmission par canal de données, un format de référence sur chaque porteuse; configurer des indicateurs pour les marges de puissance, chaque indicateur signalant si oui ou non une marge de puissance correspondant à un indicateur est déterminée sur la base de la transmission du canal de données ayant lieu sur la porteuse correspondante ou sur le format de référence; et

transmettre les marges de puissance et les indicateurs dans un rapport de marge de puissance étendu, (PH Report), sur l'une des multiples porteuses activées, et

dans lequel l'indicateur est égal à 1 bit;

dans lequel une puissance de transmission maximale virtuelle est utilisée pour identifier le format de référence, et dans lequel la puissance de transmission maximale virtuelle est déterminée comme valeur la plus basse entre une puissance de transmission maximale autorisée spécifique à la cellule et une puissance de transmission maximale autorisée spécifique au terminal.

2. Procédé selon la revendication 1, dans lequel le format de référence est déterminé sous l'hypothèse qu'un paramètre associé à un certain nombre de blocs de ressources et un décalage de puissance sont égaux à "0".

3. Procédé selon la revendication 1, dans lequel la configuration des indicateurs comprend les étapes suivantes:

mettre un indicateur à "0" pour un marge de puissance sur une porteuse correspondante où se produit la transmission du canal de données; et
régler un indicateur sur "1" pour un marge de puissance sur une porteuse correspondante où ne se produit aucune transmission du canal de données.

4. Appareil de signalement de marge de puissance, PH, d'un terminal dans un système de communication mobile acceptant l'agrégation de porteuses, l'appareil comprenant:

un émetteur-récepteur (805) configuré pour transmettre et recevoir un signal; et
un dispositif de commande (810) configuré pour commander la détermination de marge de puissance pour plusieurs porteuses activées sur la base d'une transmission par canal de données ou, en l'absence de transmission de canal de données, d'un format de référence sur chaque porteuse, pour configurer des indicateurs pour les marge de puissance, chaque indicateur indiquant si oui ou non une marge de puissance correspondant un indicateur est déterminée sur la base de la transmission du canal de données se produisant sur la porteuse correspondante ou sur le format de référence, pour transmettre les marges de puissance et les indicateurs dans un rapport de marge de puissance étendu, sur l'une des multiples porteuses activées, et
dans lequel l'indicateur est égal à 1 bit;
dans lequel une puissance de transmission maximale virtuelle est utilisée pour identifier le format de référence, et dans lequel la puissance de transmission maximale virtuelle est déterminée comme valeur la plus basse entre une puissance de transmission maximale autorisée spécifique à la cellule et une puissance de transmission maximale autorisée spécifique au terminal.

5. Appareil selon la revendication 4, dans lequel le format de référence est déterminé sous l'hypothèse qu'un paramètre associé à un certain nombre de blocs de ressources et un décalage de puissance sont égaux à "0".

6. Appareil selon la revendication 4, dans lequel le dispositif de commande (810) est configuré pour régler un indicateur sur "0" pour une marge de puissance sur une porteuse correspondante où se produit la transmission sur le canal de données et pour régler un indicateur sur "1" pour un marge de puissance sur une porteuse correspondante où ne se produit aucune transmission de canal de données.

7. Procédé permettant à une station de base de recevoir une marge de puissance, dans un système de communication mobile acceptant l'agrégation de porteuses, le procédé comprenant les étapes suivantes:

recevoir un signalement de marge de puissance étendu, comprenant plusieurs marges de puissance pour plusieurs porteuses activées et des indicateurs correspondant aux marges de puissance par le biais de l'une des différentes porteuses activées; et
identifier les indicateurs correspondant aux marge de puissance pour déterminer si oui ou non se produit la transmission du canal de données sur une porteuse correspondant à un marge de puissance, chaque indicateur indiquant si oui ou non une marge de puissance correspondant à un indicateur est déterminée sur la base de la transmission du canal de données se produisant sur la porteuse correspondante ou sur un format de référence, et dans lequel l'indicateur est égal à 1 bit;
dans lequel une puissance de transmission maximale virtuelle est utilisée pour identifier le format de référence, et dans lequel la puissance de transmission maximale virtuelle est déterminée comme valeur la plus basse entre une puissance de transmission maximale autorisée spécifique à la cellule et une puissance de transmission maximale autorisée spécifique au terminal.

8. Procédé selon la revendication 7, dans lequel le format de référence est déterminé sous l'hypothèse qu'un paramètre associé à un certain nombre de blocs de ressources et un décalage de puissance sont égaux à "0".

9. Procédé selon la revendication 7, dans lequel un indicateur est réglé sur "0" pour une marge de puissance sur une porteuse correspondante où se produit la transmission sur le canal de données et dans lequel un indicateur est réglé sur "1" pour un marge de puissance sur une porteuse correspondante où ne se produit aucune transmission de canal de données.

10. Appareil pour station de base permettant de recevoir la marge de puissance, dans un système de communication mobile, l'appareil comprenant:

un émetteur-récepteur (805) configuré pour transmettre et recevoir un signal; et
un dispositif de commande (810) configuré pour contrôler la réception d'un rapport de marge de puissance étendu, comprenant plusieurs marges de puissance pour plusieurs porteuses activées et des indicateurs correspondant aux marges de puissance par le biais de l'une des multiples porteuses activées, et pour identifier les indicateurs correspondant aux marges de puissance afin de déterminer si oui ou non se produit la transmission par canal de données sur une porteuse correspondant à un marge de puissance, chaque indicateur indiquant si oui ou non un marge de puissance correspondant à un indicateur est déterminée sur la base de la transmission par canal de données se produisant sur la porteuse correspondante ou dans un format de référence, et dans lequel l'indicateur est égal à 1 bit;
dans lequel une puissance de transmission maximale virtuelle est utilisée pour identifier le format de référence, et dans lequel la puissance de transmission maximale virtuelle est déterminée comme valeur la plus basse entre une puissance de transmission maximale autorisée spécifique à la cellule et une puissance de transmission maximale autorisée spécifique au terminal.

11. Appareil selon la revendication 10, dans lequel un indicateur est réglé sur "0" pour une marge de puissance sur une porteuse correspondante où se produit la transmission sur le canal de données et dans lequel un indicateur est réglé sur "1" pour un marge de puissance sur une porteuse correspondante où ne se produit aucune transmission de canal de données.

12. Appareil selon la revendication 10, dans lequel le format de référence est déterminé sous l'hypothèse qu'un paramètre associé à un certain nombre de blocs de ressources et un décalage de puissance sont égaux à "0".

[Fig. 1]

[Fig. 2]

[Fig. 3]

[Fig. 4]

[Fig. 5]

[Fig. 6]

```
                          ╭──────────────────╮
                          │   UE operation    │
                          ╰──────────────────╯
                                   │
                                   ▼
                          ┌──────────────────┐
                          │ PHR is triggered for a CC │──── 605
                          └──────────────────┘
                                   │
                                   ▼
                              610
                        ╱◇╲
         YES          ╱ A real PUSCH ╲          NO
      ┌──────────────  transmission for the  ──────────────┐
      │             ╲      CC?      ╱                       │
      │               ╲◇╱                                  │
      ▼                                                     ▼
┌──────────────────┐  615          625  ┌──────────────────────────┐
│ Set PH according to the │          │ Set P_CMAX,c = min { P_EMAX,c │
│       AIRMAN       │              │         P_PowerClass }      │
└──────────────────┘              └──────────────────────────┘
      │                                                     │
      ▼                          630                        ▼
┌──────────────────┐              ┌──────────────────────────┐
│ Set 1-bit indicator as '0' │──── 620    │ Set PH[i] = P_CMAX,c [i] – │
└──────────────────┘              │ {P_0_PUSCH,c[i]+ a_c[i]PL_c +f_c[i]} │
      │                          └──────────────────────────┘
      │                          635                        │
      │                              ┌──────────────────────────┐
      │                              │ Set 1-bit indicator as '1' │
      │                              └──────────────────────────┘
      │                                                     │
      └──────────────────────┬──────────────────────────────┘
                             ▼
                    ┌──────────────────────────┐  640
                    │ Include the calculated PH into │
                    │ PHR transmitted in own/other CC │
                    └──────────────────────────┘
                             ▼
                    ┌──────────────────────────┐
                    │ Include the indicators to indicate │  645
                    │ if the PH value is based on a real │
                    │ transmission or a reference │
                    │     format into PHR      │
                    └──────────────────────────┘
                             ▼
                    ┌──────────────────────────┐  650
                    │ Transmit PHR by using the │
                    │ resource indicated by UL grant │
                    └──────────────────────────┘
                             ▼
                    ╭──────────────────╮
                    │       END         │
                    ╰──────────────────╯
```

[Fig. 7]

```
                    ┌─────────────────────┐
                    │    eNB operation    │
                    └─────────────────────┘
                              │
                              ▼
                    ┌─────────────────────┐
                    │ Receive a PHR through a │──── 705
                    │          CC          │
                    └─────────────────────┘
                              │
                              ▼
                    ┌─────────────────────┐
                    │ Check indicators for each │──── 710
                    │          PH          │
                    └─────────────────────┘
                              │
                              ▼
                           715
                          ╱────╲
             YES     ╱              ╲    NO
          ┌────────╱  indicator set '0'?  ╲────────┐
          │        ╲                      ╱        │
          │          ╲                  ╱          │
          ▼            ╲────────────────            ▼
┌─────────────────────┐                  ┌─────────────────────┐
│ Confirm that the PH is │── 720      725 ──│ Confirm that the PH is │
│ derived based on real │                  │ derived based on virtual │
│ P_CMAX and real format │                  │ P_CMAX and virtual format │
└─────────────────────┘                  └─────────────────────┘
          │                                        │
          └──────────────────┬─────────────────────┘
                             ▼
                    ┌─────────────────────┐
                    │         END         │
                    └─────────────────────┘
```

[Fig. 8]

```
        825              830                  835
   ┌──────────┐   ┌──────────┐   ┌────────────────────┐
   │  HIGHER  │   │  HIGHER  │   │  CONTROL MESSAGE   │
   │LAYER DEVICE│  │LAYER DEVICE│  │     PROCESSOR      │
   └──────────┘   └──────────┘   └────────────────────┘
 820                                                810           815
   ┌──────────────────────────────────────────┐  ┌──────────┐  ┌──────────┐
   │        MULTIPLEXER/DEMULTIPLEXER          │  │CONTROLLER│  │    PH    │
   └──────────────────────────────────────────┘  └──────────┘  │CALCULATOR│
 805                                                            └──────────┘
   ┌────────────────────────────────────────────────────────────────────┐
   │                           TRANSCEIVER                              │
   └────────────────────────────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010158147 A1